# EUROPÄISCHE PATENTSCHRIFT

(11) **EP 3 448 710 B1**
(45) Veröffentlichungstag und Bekanntmachung des Hinweises auf die Patenterteilung: **06.05.2020**
(21) Anmeldenummer: 17710229.0
(22) Anmeldetag: 10.03.2017
(51) Int. Cl.: B60K 28/16, B60W 30/18

(54) **VERFAHREN UND VORRICHTUNG ZUM AUSWÜHLEN EINES KRAFTFAHRZEUGS**
METHOD AND DEVICE FOR DIGGING OUT A MOTOR VEHICLE
PROCÉDÉ ET DISPOSITIF POUR DÉSEMBOURBER UN VÉHICULE AUTOMOBILE

(30) Priorität: 29.04.2016 DE 102016207336
(43) Veröffentlichungstag der Anmeldung: 06.03.2019
(73) Patentinhaber: Robert Bosch GmbH, 70442 Stuttgart (DE)
(72) Erfinder: ENDRES, Marcus, 71634 Ludwigsburg (DE)
(86) Internationale Anmeldenummer: PCT/EP2017/055676
(87) Internationale Veröffentlichungsnummer: WO 2017/186398

(56) Entgegenhaltungen:
- DE-A1-102008 036 048
- DE-A1-102009 036 058
- DE-A1-102013 218 664
- DE-A1-102014 207 081

## Beschreibung

### Stand der Technik

Aus der DE 10 2010 043 250 A1 ist ein Verfahren zum Freischaukeln eines Fahrzeugs mit einem automatischen bzw. automatisierten Getriebe bekannt, wobei nach Erkennung einer Betriebssituation, in welcher dasselbe freizuschaukeln ist, zum Freischaukeln abwechselnd ein in einer Soll-Fahrtrichtung wirkendes Antriebsmoment an angetriebenen Rädern aufgebaut und wieder abgebaut wird.

Aus der DE 10 2014 207 081 A1 ist ein Verfahren zum Auswühlen eines stillstehenden Kraftfahrzeugs bekannt,- bei dem der Fahrer mittels eines Bedienelements eine Anfahrrichtung für das Kraftfahrzeug vorgibt und bei dem mittels zeitlich aufeinanderfolgender fahrerunabhängiger Antriebskraftpulse, welche eine erste Intensität aufweisen, eine Pendelbewegung des Kraftfahrzeugs erzeugt wird.

### Offenbarung der Erfindung

Die Erfindung betrifft ein Verfahren zum Auswühlen bzw. Freischaukeln bzw. Anfahren eines stillstehenden Kraftfahrzeugs,
- bei dem der Fahrer mittels eines Bedienelements eine Anfahrrichtung für das Kraftfahrzeug vorgibt,
- bei dem mittels zeitlich aufeinanderfolgender fahrerunabhängiger Antriebskraftpulse, welche eine erste Intensität aufweisen, eine Pendelbewegung des Kraftfahrzeugs erzeugt wird,
- bei dem die räumliche Amplitude der Pendelbewegung ermittelt wird und mit einem vorgegebenen Schwellenwert verglichen wird und
- wenn die räumliche Amplitude der Pendelbewegung des Kraftfahrzeugs den Schwellenwert überschreitet, anschließend mit wenigstens einem in die vorgegebene Anfahrrichtung gerichteten Antriebskraftpuls, welcher eine zweite Intensität aufweist welche größer als die erste Intensität ist, eine Anfahrbewegung des Kraftfahrzeugs in die vorgegebene Anfahrrichtung erzeugt wird.

Dadurch wird dem Fahrer eine Möglichkeit gegeben, auch bei einem in schwierigem, insbesondere vereisten, verschlammten oder schneebedeckten, Gelände festgefahrenen bzw. feststeckenden Fahrzeug dieses dennoch fortzubewegen. Unter dem Begriff des Auswühlens wird dabei das Befreien des Kraftfahrzeugs aus eigener Kraft aus einer bzgl. des Reibwerts schwierigen Anfahrsituation verstanden.

Eine vorteilhafte Ausgestaltung der Erfindung ist dadurch gekennzeichnet, dass die Antriebskraftpulse erster Intensität in die vorgegebene Anfahrrichtung gerichtet sind.

Eine vorteilhafte Ausgestaltung der Erfindung ist dadurch gekennzeichnet, dass die Antriebskraftpulse erster Intensität alternierend in die vorgegebene Anfahrrichtung und entgegen der vorgegebenen Anfahrrichtung weisen. Dadurch kann eine Schaukelbewegung des Fahrzeugs erzeugt werden.

Eine vorteilhafte Ausgestaltung der Erfindung ist dadurch gekennzeichnet, dass die Richtung, in welche die Antriebkraftpulse wirken, mittels einer Ansteuerung des Getriebes des Kraftfahrzeugs vorgegeben wird.

Eine vorteilhafte Ausgestaltung der Erfindung ist dadurch gekennzeichnet, dass das Kraftfahrzeug eine Abstandssensorik aufweist und der Amplitudenausschlag des Weges des Kraftfahrzeugs entgegen der vorgegebenen Anfahrrichtung während der Pendelbewegung mittels von Bremseingriffen derart begrenzt wird, dass keine Kollision des Kraftfahrzeugs mit einem benachbarten Objekt, welches von der Abstandssensorik detektiert wurde, stattfindet. Hierbei kann auch auf die in zahlreichen Fahrzeugen bereits enthaltene Abstandssensorik zurückgegriffen werden.

Eine vorteilhafte Ausgestaltung der Erfindung ist dadurch gekennzeichnet, dass der Amplitudenausschlag des Kraftfahrzeugs derart begrenzt wird, dass ein Mindestabstand zu dem Objekt nicht unterschritten wird.

Eine vorteilhafte Ausgestaltung der Erfindung ist dadurch gekennzeichnet, dass eine Umkehr der Richtung der Antriebskraftpulse erster Intensität dann erfolgt, wenn nach Ablauf eines Zeitintervalls vorgegebener Länge der vom Kraftfahrzeug zurückgelegte Weg einen vorgegebenen Schwellenwert unterschritten hat.

Eine vorteilhafte Ausgestaltung der Erfindung ist dadurch gekennzeichnet, dass eine Umkehr der Richtung der Antriebskraftpulse dann erfolgt, wenn sich das Kraftfahrzeug während eines Zeitintervalls vorgegebener Länge trotz Anliegen eines Motormoments nicht bewegt.

Weiter umfasst die Erfindung eine Vorrichtung, enthaltend Mittel, die zur Durchführung der erfindungsgemäßen Verfahren ausgestaltet sind. Dabei handelt es sich insbesondere um ein Steuergerät, in welchem der Programmcode zur Durchführung der erfindungsgemäßen Verfahren hinterlegt ist.

Die Zeichnung umfasst die Figuren 1 bis 3.
In Fig. 1 ist der zeitliche Verlauf von Motormomentpulsen dargestellt.
In Fig. 2 ist der grundlegende Ablauf einer Ausgestaltung des Verfahrens dargestellt.
In Fig. 3 ist beispielhaft eine Bewegungsanalyse einer Radbewegung dargestellt.

Die vorliegende Erfindung beschreibt eine Auswühllogik bzw. Freischaufellogik für ein Kraftfahrzeug und eignet sich für Fahrsituationen, in welchen das Kraftfahrzeug sich infolge der Bodenbeschaffenheit auch mit Hilfe einer Antriebsschlupfregelung nicht weiterbewegen kann und feststeckt bzw. festsitzt. Eine solche Bodenbeschaffenheit kann z.B. Tiefschnee, Eis oder Schlamm sein. Durch eine gezielte Aufbringung von Motormomentpulsen und ggf. zusätzliche Beeinflussung der Kupplung wird dem Fahrzeug schrittweise kinetische Energie zugeführt, welche letztlich zum gewünschten Anfahren des Kraftfahrzeugs führt.

Die Erfindung eignet sich vor allem für Automatikfahrzeuge, welche an der Front- und Heckseite Abstandssensoren aufweisen.

Der Fahrer legt mithilfe eines Bedienelementes die gewünschte Anfahrrichtung bzw. Zielfahrrichtung des Kraftfahrzeugs fest. Über am Fahrzeug vorhandene Abstandssensoren kann die Bewegung des Fahrzeugs gegrenzt werden, um Kollisionen zu vermeiden. Sollte das Fahrzeug über die Möglichkeit aktiver bzw. fahrerunabhängiger Lenkeingriffe verfügen, dann kann die Erfindung auch für das automatische Ausparken aus einer Parklücke verwendet werden. Mittels eines Fahrspurwechselassistenzsystems ist sogar eine Eingliederung des Fahrzeugs in den fließenden Verkehr möglich.

Die Aktivierung bzw. Freischaltung der Auswühl- bzw. Freischaufelfunktion kann z.B. mittels eines Schalters erfolgen. Es ist aber auch denkbar, die Funktion automatisch zu aktivieren, wenn trotz Betätigung des Fahrpedals keine Vorwärtsbewegung des Kraftfahrzeugs nach Ablauf eines Zeitintervalls vorgegebener Länge erfolgt ist.

Eine Abbruch oder ein Nichtzulassen der genannten Funktion kann dann stattfinden, wenn ein zu geringer Abstand zu einem benachbarten Fahrzeug festgestellt wird oder wenn sich das Fahrzeug auf einer in Längsrichtung zu stark geneigten Fahrbahn befindet. In letzterem Fall könnte sich das Fahrzeug unerwünschterweise bei zu starker Neigung und zu geringem Reibwert entgegen der Wunschrichtung bewegen.

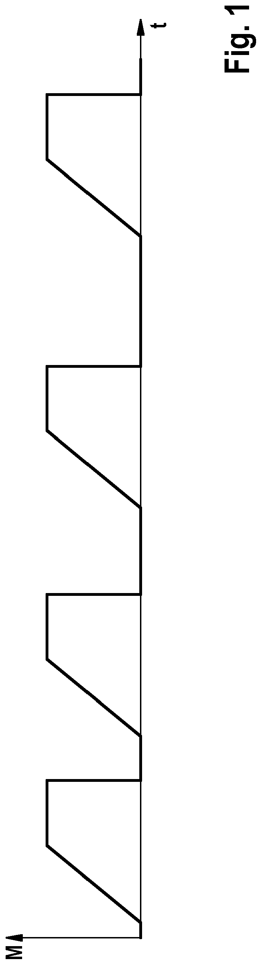

In einer Ausführungsform der Erfindung werden im Fahrzeugstillstand zu Beginn Motormomentpulse bzw. Antriebsmomentpulse bzw. Antriebskraftpulse M auf die angetriebenen Räder aufgebracht, wie dies in Fig. 1 dargestellt ist. Dort ist in Abszissenrichtung die Zeit t und in Ordinatenrichtung die Intensität M der Antriebskraft dargestellt. Diese Pulse werden solange aufgebracht, bis entweder ein Abbruchkriterium erfüllt ist oder bis eine geringfügige Bewegung des Kraftfahrzeugs stattgefunden hat. Das Vorliegen einer solchen Bewegung kann z.B. über eine Raddrehzahlmessung der nicht angetriebenen Räder oder auch über eine Abstandsmessung zu einem stillstehenden benachbarten Objekt bzw. Fahrzeug erfolgen.

Durch eine Bewegungsanalyse oder eine Frequenzanalyse können die optimalen Zeitpunkte und die optimale Dauer der Antriebsmomentpulse ermittelt werden.

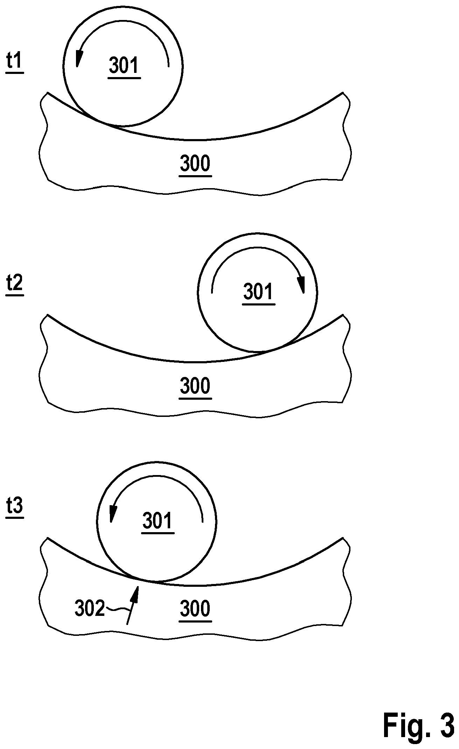

Die Größe bzw. Intensität der Antriebsmomentpulse kann abhängig vom ermittelten Reibwert gewählt werden. Bei einem Antrieb des Fahrzeugs durch Elektromotoren oder einem Automatikgetriebe können die Räder auch kurzzeitig entgegen der Wunschrichtung angetrieben werden. Eine solche Bewegungsanalyse ist in Fig. 3 dargestellt. Dort sind eine Kuhle 300 sowie ein Fahrzeugrad 301 zu drei verschiedenen aufeinanderfolgenden Zeitpunkten t1, t2 und t3 dargestellt. Das Fahrzeugrad 301 gehört zu einem nicht dargestellten Fahrzeug, welches die Kuhle 300 in der Zeichenebene nach links verlassen möchte. Bis zum Zeitpunkt t1 bewegt sich das Fahrzeug nach links auf den linken Rand der Kuhle zu, bis dann zum Zeitpunkt t1 der Radabriss erfolgt, d.h. das Rad dreht durch. Es findet keine weitere Vorwärtsbewegung des Kraftfahrzeugs statt. Deshalb wird ein in die entgegengesetzte Richtung gerichteter Antriebskraftpuls an das Kraftfahrzeug angelegt und das Fahrzeug bewegt sich rückwärts bis zum Zeitpunkt t2 ein erneuter Radabriss erfolgt. Alternativ zur Aufbringung des in die entgegengesetzte Richtung gerichteten Antriebskraftpulses kann dem Fahrzeug auch ein Zurückrollen erlaubt werden, bis es zum Zeitpunkt t2 seinen Umkehrpunkt erreicht und danach wieder vorwärts rollt. Die Zeitpunkte für das Aufbringen der Antriebskraftpulse werden anhand der zeitlichen Abstände oder der räumlichen Abstände von den Umkehrpunkten sowie weiteren Parametern wie z.B. Reibwert, Radgeschwindigkeit und bekannten Totzeiten ermittelt. Die Totzeiten berücksichtigen dabei die Zeitdauer, welche von der Antriebskraftpulsanforderung bis zum Wirken des Antriebskraftpulses am Rad vergeht. Das bedeutet, dass die Motormomentanforderung bzw. Antriebskraftpulsanforderung schon während der Bewegung des Fahrzeugs entgegen der gewünschten Richtung ausgegeben wird, so dass das Moment bei der Bewegung in die gewünschte Richtung zur Verfügung steht. Dazu kann z.B. derjenige Punkt festgelegt werden, an welchem idealerweise das maximale Antriebsmoment wirken soll. Dies kann zum Zeitpunkt t3 der mittels des Pfeils 302 bezeichnete Punkt sein. Auch kann es sinnvoll sein, die Start- und Endrampen der Antriebskraftpulse anzupassen, um einen Radabriss entweder nur sehr kurz oder sogar gar nicht zu erreichen.

Sobald das Kraftfahrzeug genügend kinetische Energie aufweist, kann mit einer finalen längeren und höheren Motormomentanforderung das Fahrzeug in Wunschrichtung bewegt werden.

Bei einer erkannten Bewegung des Fahrzeugs oder einem nur kleinen durch den Fahrer vorgegebenen Fahrpedalweg kann die Funktion deaktiviert werden und der Fahrerwunsch bzgl. des Motormoments umgesetzt werden.

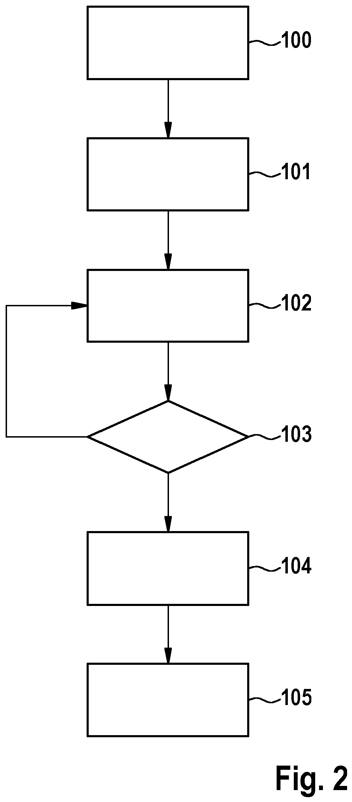

In Fig. 2 ist der grundlegende Ablauf einer Ausgestaltung des Verfahrens dargestellt. Nach dem Start in Block 100 wird in Block 101 durch den Fahrer mittels eines Bedienelements eine Anfahrrichtung für das Kraftfahrzeug vorgegeben. Anschließend erfolgen in Block 102 ein oder mehrere zeitlich aufeinanderfolgende fahrerunabhängige Antriebskraftpulse, welche eine erste Intensität aufweisen. In Block 103 wird danach abgefragt, ob die räumliche Amplitude einer durch die Antriebskraftpulse erzeugten Pendelbewegung einen Schwellenwert überschreitet. Ist dies nicht der Fall, dann wird zu Block 102 zurückgekehrt. Ist dies jedoch das Fall, dann wird in Block 104 anschließend mit wenigstens einem in die vorgegebene Anfahrrichtung gerichteten Antriebskraftpuls, welcher eine zweite Intensität aufweist welche größer als die erste Intensität ist, eine Anfahrbewegung des Kraftfahrzeugs in die vorgegebene Anfahrrichtung erzeugt. In Block 105 endet das Verfahren.

## Patentansprüche

1. Verfahren zum Auswühlen eines stillstehenden Kraftfahrzeugs,
- bei dem der Fahrer mittels eines Bedienelements eine Anfahrrichtung für das Kraftfahrzeug vorgibt (101),
- bei dem mittels zeitlich aufeinanderfolgender fahrerunabhängiger Antriebskraftpulse (M), welche eine erste Intensität aufweisen, eine Pendelbewegung des Kraftfahrzeugs erzeugt wird (102),
**dadurch gekennzeichnet, dass**
- bei dem die räumliche Amplitude der Pendelbewegung ermittelt wird und mit einem vorgegebenen Schwellenwert verglichen wird (104) und
- wenn die räumliche Amplitude der Pendelbewegung des Kraftfahrzeugs den Schwellenwert überschreitet, anschließend mit wenigstens einem in die vorgegebene Anfahrrichtung gerichteten Antriebskraftpuls, welcher eine zweite Intensität aufweist welche größer als die erste Intensität ist, eine Anfahrbewegung des Kraftfahrzeugs in die vorgegebene Anfahrrichtung erzeugt wird (105).

2. Verfahren nach Anspruch 1, **dadurch gekennzeichnet, dass** die Antriebskraftpulse (M) erster Intensität in die vorgegebene Anfahrrichtung gerichtet sind.

3. Verfahren nach Anspruch 1, **dadurch gekennzeichnet, dass** die Antriebskraftpulse (M) erster Intensität alternierend in die vorgegebene Anfahrrichtung und entgegen der vorgegebenen Anfahrrichtung weisen.

4. Verfahren nach Anspruch 1, **dadurch gekennzeichnet, dass** die Richtung, in welche die Antriebkraftpulse (M) wirken, mittels einer Ansteuerung des Getriebes des Kraftfahrzeugs vorgegeben wird.

5. Verfahren nach Anspruch 1, **dadurch gekennzeichnet, dass** das Kraftfahrzeug eine Abstandssensorik aufweist und der Amplitudenausschlag des Weges des Kraftfahrzeugs entgegen der vorgegebenen Anfahrrichtung während der Pendelbewegung mittels von Bremseingriffen derart begrenzt wird, dass keine Kollision des Kraftfahrzeugs mit einem benachbarten Objekt, welches von der Abstandssensorik detektiert wurde, stattfindet.

6. Verfahren nach Anspruch 5, **dadurch gekennzeichnet, dass** der Amplitudenausschlag des Kraftfahrzeugs derart begrenzt wird, dass ein Mindestabstand zu dem Objekt nicht unterschritten wird.

7. Verfahren nach Anspruch 1, **dadurch gekennzeichnet, dass** eine Umkehr der Richtung der Antriebskraftpulse (M) erster Intensität dann erfolgt, wenn nach Ablauf eines Zeitintervalls vorgegebener Länge der vom Kraftfahrzeug zurückgelegte Weg einen vorgegebenen Schwellenwert unterschritten hat.

8. Verfahren nach Anspruch 7, **dadurch gekennzeichnet, dass** eine Umkehr der Richtung der Antriebskraftpulse (M) erster Intensität dann erfolgt, wenn sich das Kraftfahrzeug während des Zeitintervalls vorgegebener Länge trotz Anliegen eines Motormoments nicht bewegt.

9. Vorrichtung, enthaltend Mittel, die zur Durchführung der erfindungsgemäßen Verfahren gemäß Ansprüche 1 bis 8 ausgestaltet sind.

## Claims

1. Method for digging out a stationary motor vehicle,
- with which the driver specifies a driving off direction for the motor vehicle (101) by means of an operating element,
- with which a pendulum motion of the motor vehicle is produced (102) by means of temporally successive driver-independent driving force pulses (M) having a first intensity,
**characterized in that**
- with which the spatial amplitude of the pendulum motion is determined and compared with a specified threshold value (104) and
- if the spatial amplitude of the pendulum motion of the motor vehicle exceeds the threshold value, then a driving off movement of the motor vehicle is produced (105) in the specified driving off direction with at least one driving force pulse directed in the specified driving off direction with a second intensity greater than the first intensity.

2. Method according to Claim 1, **characterized in that** the driving force pulses (M) of the first intensity are directed in the specified driving off direction.

3. Method according to Claim 1, **characterized in that** the driving force pulses (M) of the first intensity are alternately directed in the specified driving off direction and opposite to the specified driving off direction.

4. Method according to Claim 1, **characterized in that** the direction in which the driving force pulses (M) act is specified by actuating the gearbox of the motor vehicle.

5. Method according to Claim 1, **characterized in that** the motor vehicle comprises a distance sensing arrangement and the amplitude deflection of the travel of the motor vehicle opposite to the specified driving off direction during the pendulum motion is limited by means of braking interventions so that no collision of the motor vehicle with an adjacent object that has been detected by the distance sensing arrangement occurs.

6. Method according to Claim 5, **characterized in that** the amplitude deflection of the motor vehicle is limited so that the distance from the object does not fall below a minimum distance.

7. Method according to Claim 1, **characterized in that** a reversal of the direction of the driving force pulses (M) of the first intensity takes place if the distance travelled by the motor vehicle is less than a specified threshold value following the expiry of a time interval of specified length.

8. Method according to Claim 7, **characterized in that** a reversal of the direction of the driving force pulses (M) of the first intensity takes place if the motor vehicle does not move during the time interval of specified length despite applying an engine torque.

9. Device containing means designed for carrying out the method according to the invention according to Claims 1 to 8.

## Revendications

1. Procédé pour désembourber un véhicule automobile immobilisé,
- avec lequel le conducteur prédéfinit au moyen d'un élément de commande une direction de démarrage pour le véhicule automobile (101),
- avec lequel un mouvement de balancier du véhicule automobile est généré au moyen d'impulsions de force motrice (M), qui présentent une première intensité, chronologiques et indépendantes du conducteur (102),
**caractérisé en ce que**
- avec lequel l'amplitude dans l'espace du mouvement de balancier est déterminée et comparée à une valeur de seuil prédéfinie (104) et
- lorsque l'amplitude dans l'espace du mouvement de balancier du véhicule automobile dépasse la valeur de seuil, un mouvement de démarrage du véhicule automobile dans la direction de démarrage prédéfinie est ensuite généré avec au moins une impulsion de force motrice dirigée dans la direction de démarrage prédéfinie, laquelle présente une deuxième intensité qui est supérieure à la première intensité (105).

2. Procédé selon la revendication 1, **caractérisé en ce que** les impulsions de force motrice (M) de la première intensité sont dirigées dans la direction de démarrage prédéfinie.

3. Procédé selon la revendication 1, **caractérisé en ce que** les impulsions de force motrice (M) de la première intensité sont orientées en alternance dans la direction de démarrage prédéfinie et à l'opposé de la direction de démarrage prédéfinie.

4. Procédé selon la revendication 1, **caractérisé en ce que** la direction dans laquelle agissent les impulsions de force motrice (M) est prédéfinie au moyen d'une commande de la boîte de vitesses du véhicule automobile.

5. Procédé selon la revendication 1, **caractérisé en ce que** le véhicule automobile possède un système de détection de distance et le débattement d'amplitude de la course du véhicule automobile à l'opposé de la direction de démarrage prédéfinie pendant le mouvement de balancier est limité au moyen d'interventions des freins de telle sorte qu'aucune collision du véhicule automobile n'a lieu avec un objet voisin qui a été détecté par le système de détection de distance.

6. Procédé selon la revendication 5, **caractérisé en ce que** le débattement d'amplitude du véhicule automobile est limité de telle sorte qu'une distance minimale par rapport à l'objet n'est jamais franchie vers le bas.

7. Procédé selon la revendication 1, **caractérisé en ce qu'**une inversion de la direction des impulsions de force motrice (M) de la première intensité a lieu lorsque, après écoulement d'un intervalle de temps d'une durée prédéfinie, la course parcourue par le véhicule automobile est devenue inférieure à une valeur de seuil prédéfinie.

8. Procédé selon la revendication 7, **caractérisé en ce qu'**une inversion de la direction des impulsions de force motrice (M) de la première intensité a lieu lorsque le véhicule automobile ne se déplace pas pendant l'intervalle de temps d'une durée prédéfinie malgré l'application d'un couple moteur.

9. Dispositif, comprenant des moyens qui sont configurés pour mettre en œuvre le procédé conforme à l'invention selon l'une des revendications 1 à 8.
